(19) Europäisches Patentamt
European Patent Office
Office européen des brevets

(11) **EP 3 652 754 B1**

(12) **EUROPEAN PATENT SPECIFICATION**

(45) Date of publication and mention
of the grant of the patent:
**05.04.2023 Bulletin 2023/14**

(51) International Patent Classification (IPC):
*H01B 1/08* (2006.01)    *H01M 4/1391* (2010.01)
*H01M 4/505* (2010.01)    *H01M 4/525* (2010.01)
*C01G 53/00* (2006.01)

(21) Application number: **18835069.8**

(22) Date of filing: **13.07.2018**

(52) Cooperative Patent Classification (CPC):
**H01B 1/08; C01G 53/006; C01G 53/44;**
**H01M 4/525;** C01P 2004/03; C01P 2004/32;
C01P 2004/51; C01P 2004/61; C01P 2004/84;
C01P 2006/11; C01P 2006/12; C01P 2006/40;
Y02E 60/10

(86) International application number:
**PCT/CN2018/095649**

(87) International publication number:
**WO 2019/015533 (24.01.2019 Gazette 2019/04)**

(54) **METHOD FOR PRODUCING CATHODE PARTICLES**

VERFAHREN ZUR HERSTELLUNG VON KATHODENPARTIKELN

PROCÉDÉ DE PRODUCTION DE PARTICULES DE CATHODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2017 US 201762532996 P**

(43) Date of publication of application:
**20.05.2020 Bulletin 2020/21**

(73) Proprietor: **Microvast Power Systems Co., Ltd.**
**Huzhou, Zhejiang 313000 (CN)**

(72) Inventors:
• **YONEMOTO, Bryan**
**Clearwater, FL 33764 (US)**
• **MATTIS, Wenjuan Liu**
**Huzhou**
**Zhejiang 313000 (CN)**
• **ZHANG, Zhifeng**
**Huzhou**
**Zhejiang 313000 (CN)**
• **ZHANG, Xiao**
**Huzhou**
**Zhejiang 313000 (CN)**

(74) Representative: **Zaboliene, Reda**
**Metida**
**Business center Vertas**
**Gyneju str. 16**
**01109 Vilnius (LT)**

(56) References cited:
WO-A1-2018/015210    US-A1- 2012 068 109
US-A1- 2012 080 649    US-A1- 2013 126 802
US-A1- 2015 311 514    US-A1- 2016 118 662
US-B2- 7 695 649

**Description**

**Cross-reference to Related Application**

This invention is based on and claims the priority of US provisional application No. 62/532,996, filed on July 15, 2017.

**Technical Field**

This invention relates to a method for producing concentration gradient cathode particles using a continuous co-precipitation procedure where 3-to-N composition changes occur between the center and the surface of the particles.

**Background Art**

The lithium-ion battery, originally commercialized in the early 1990s, has come to dominate the energy storage market for hand-held, electronic consumer devices. This is because the battery is rechargeable, and has high mass and volume energy density. Now, lithium-ion batteries are also being extensively investigated for electric vehicle applications. In electric vehicles, an ideal battery cathode will have high capacity, high power, improved safety, long cycle life, low toxicity and lower production costs. Generally, cathode materials are unable to meet all these requirements.

One reason that cathode materials, commonly of the form $LiMO_2$ (M = Ni, Co, Mn typically), are unable to meet all the demands for electric vehicles is because changing the composition of the primary transition metals - Ni, Mn & Co - results in trade-offs in performance. $LiNiO_2$ delivers high capacity, > 200 mAh/g, but has poor cycle life, high Li residuals at the surface, and low safety during thermal runaway; LCO has high first cycle efficiency; and Mn rich NMC materials have superior thermal stability. To best utilize the distinct advantages of various materials, concentration gradient materials, where a less stable interior is coated with a more stable exterior composition, show promise, but numerous disadvantages of current processing methods need to be addressed.

US7695649/CN100593253 describes a method to prepare concentration gradient NMC and/or LCO materials by preparing a core-shell structure, effectively hybridizing the advantageous properties of various cathode compositions into a single material. The core-shell materials described had a stoichiometry change from the core to shell of at least 10%, and potentially an even greater value. It was later shown by Amiruddin et al. ECS Trans., 6, 3-9, (2008) that a large stoichiometry change in Ni (about 30%) results in delamination of the shell from the core.

CN103326016 proposes a multilayer core-shell material over the simpler core-shell structure, yet the method is still susceptible to delamination, and its negative impact, since it is the size of the stochiometric change that dictates volume expansion and contraction mismatch, not the explicit number of shells. The focus of the patent was about managing the impedance from over-lithiation of manganese species in NMC instead of concerning interfacial side reactions, the protection of a low stability core structure and the size of compositional change from the core to surface.

To address the core-shell delamination, US8591774 describes a method to prepare full concentration gradient cathode particles, which have a continuous and inversely proportional change between an intended core and shell composition. A full concentration gradient can also be described as a material that mathematically has infinite number of shells from the core to surface composition, and is a limiting case for multilayer core-shell materials like those described in CN103326016. Unfortunately, the formation of a full concentration gradient inherently necessitates a transient reaction condition due to the non-constant feed composition (i.e., d[X]/dt ≠ 0 for the process; that is, a physical property or variable in the process is changing with time).

Given the requirement of transience, semi-batch processes which by their nature operate under d[X]/dt ≠ 0 conditions are commonly used. Multilayer concentration gradient materials, such as those in CN103326016, are also made via batch processing. The problem is batch procedures, presuming no seeding, have low solid volume fractions in the slurry, low product yields per slurry collected, under developed particle specifications (density, size, shape) and high product variability from batch to batch.

In US8591774, some example particles are prepared in a continuous fashion using a single reaction vessel, effectively increasing the solid volume fraction. However, the low mass yields, elevated levels of waste generation, and variation of collected particle core and surface composition with time are undesirable following the described example.

**Technical Solution**

The objective of this method is to prepare concentration gradient cathode active material for use in a lithium-ion battery by forming concentration gradient precipitation cathode particles. The inventive method in defined in the claims.

The continuous process proposed is designed to overcome the drawbacks of prior arts processing methods:

continual collection of concentration gradient particles without the core and surface compositions significantly changing with time;

increasing the mass collected per processed fluid volume;

reducing the waste fluid generated during processing; and

improving the tap density, morphology and surface area.

The proposed method will also reduce the variability of collected particle specs prepared using co-precipitation reactions.

Another goal is to define a processing protocol to reduce the occurrence and negative electrochemical impact of core-shell layer delamination from the cathode particle when large compositional variations from core to surface exist.

Another object of the invention is to improve precursor utilization and reduce the amount of solid waste of materials when continuous processing is being employed under transient conditions (i.e., $d[X]/dt \neq 0$; that is, a physical property or variable in the process is changing with time).

**Description of Drawings**

Fig. 1 shows precipitation zones configured in series.

Fig. 2 shows one of the precipitation zones.

Fig. 3 shows precipitation zones configured in series with parallel processing steps for selecting precipitation zones.

Fig. 4 shows schematically the core-shell nature of the composition gradient particles as they exit the listed precipitation zones.

Fig. 5 shows example concentration gradient profiles that could exist if the number of precipitation zones is 5.

Fig. 6 shows the concentration of product leaving the last precipitation zone in the series.

Fig. 7 is EDS of Example 1 - 112-122.

Fig. 8 is the cycle performance of the cathode material.

**Mode for Invention**

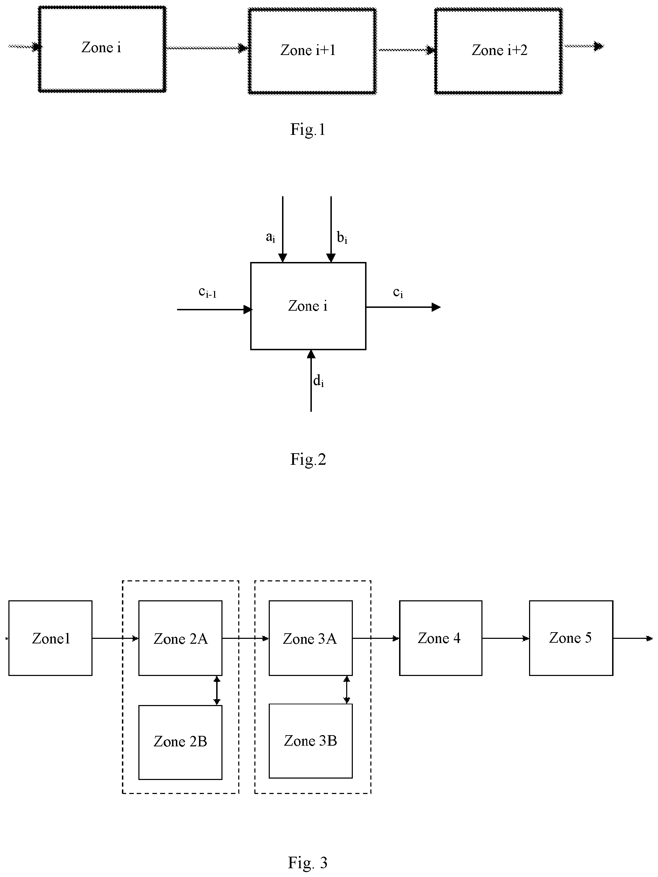

The inventive process is to use a series of precipitation zones (see Fig. 1) from i=1 to N (N is not less than 3) to form concentration gradient precipitated particles having a multilayer core-shell structure comprised of N layers. N is preferred to be between 3-30, and more preferred from 4-10. By using a series of precipitation zones, the collected particles will have an unchanging composition order from layer 1 to N. This feature will occur once enough time has passed so most or all of the particles exiting zone N are originally formed in zone 1.

Each precipitation zone is blanketed or bubbled by He, N2 or Ar gas and includes a feed stream ($a_i$) providing the precipitation cations, a feed stream ($b_i$) providing the precipitation anions, a continuous outflow (ci) of precipitation particle slurry to the next precipitation zone, and an optional inlet stream ($d_i$) for the chelating agents (see Fig. 2). Additional streams ($e_i...z_i$) may be present to add additional species to the precipitation zone or to remove solvent through an in-situ thickening device. Further, a continuous inflow ($c_{i-1}$) containing precipitation particle slurry from a prior precipitation zone will be provided to every precipitation zone except precipitation zone 1. The pH value of each precipitation zone is maintained using a pH meter connected to a metering pump.

The volume of each precipitation zone is defined as the volume of a single processing vessel or the sum of a number of processing vessels, pumps, or solid-liquid thickening devices connected in parallel (see Fig. 3). For example, the precipitation zone 2 includes precipitation zone 2A and precipitation zone 2B connected in parallel, and the precipitation zone 3 includes precipitation zone 3A and precipitation zone 3B connected in parallel. That is, the precipitation zone 2 or the precipitation zone 3 is split into more than one vessel that execute simultaneously to form the slurry solution, so that streams can flow in series or in parallel. If a thickening device is present, some fluid with little to no precipitated particles may be removed from the precipitation zone concurrently with the outflow stream ($c_i$). A thickening device is an external equipment or configuration that concentrates the precipitated particles, then removes some liquid before re-injecting the higher concentration back to the reactor.

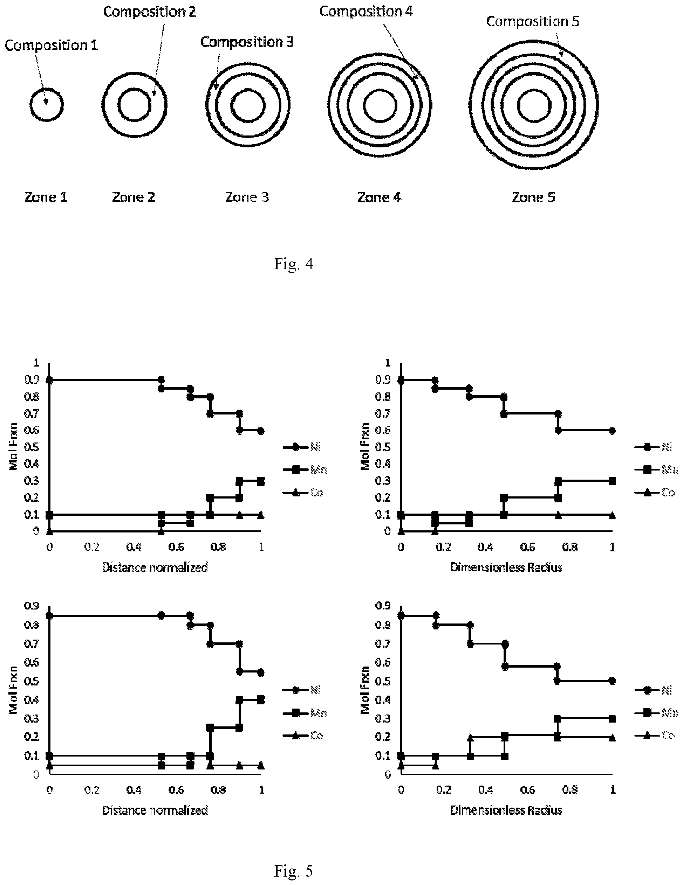

In the precipitation zones, precipitated particles are formed. The precipitation particle slurry formed in each precipitation zone is continuously supplied to the next adjacent precipitation zone through the outflow stream ($c_i$). Finally, in the last precipitation zone N, precursor particles comprised of N layers are formed, wherein layer i of each of the particles is precipitated and formed in the precipitation zone i (see Fig. 4).

Each precipitation zone can generally be described by the following mass balance equation:

$$\frac{d(\rho_{c,i} V_i)}{dt} = \sum_{\alpha=a}^{z} F_{\alpha,i} \rho_{\alpha,i} + F_{c,i-1} \rho_{c,i-1} \; and \; F_{c,0} = 0$$

where for a particular precipitation zone i, $\rho_{\alpha,i}$ are the fluid densities of the precipitation zone i, $V_i$ is the volume of the precipitation zone i, $F_{\alpha,i}$ are the volumetric flowrates of the precipitation zone i, wherein $\alpha=$ a to z, representing the inlet/outlet streams of $a_i$, $b_i$, $c_i$, and $d_i$, $e_i$, ..., $z_i$, if possible.

The mean residence time for each precipitation zone is defined as:

$$\tau_i = \frac{V_i}{F_{out}}$$

where $F_{out}$ is the summation of all flowrates exiting precipitation zone i. While $\tau_i$ could technically be infinite, it is preferred to be from 0.1-72 hours, more preferred to be from 0.1-48 hours.

For the present invention, it is preferred that $V_i$ is constant. That is, for each precipitation zone, its volume is ideally constant. Practically, due to processing fluctuations, the value of $V_i$ may fluctuate +/- 10% during operation and be controlled by a level meter.

The volume, $V_i$, of each precipitation zone can technically have any value. It is preferred that $V_1 \leq V_2 \leq ... \leq V_N$. That is, the volume of each precipitation zone is ideally larger than the previous precipitation zone. This is selected because in a continuous series, $V_{i+1}$ must accommodate the exiting slurry flow from $V_i$ and the addition of new reactive solvents, so unless the volume increases, the zone i+1 has a much faster residence time. If the residence time of each zone speeds up too much, it is difficult to prepare quality particles.

The flowrates of $F_{\alpha,i}$ may be 0-100% of $V_i/\tau_i$ and will be 0-500% of $V_1/\tau_1$.

Depending upon the relationship, the time to reach a concentration equal to the batch reaction varies for each zone. However, in all cases it is apparent that the eventual mass of precipitated particle per volume will always be higher in the inventive method described than a batch reaction under operating conditions.

The precipitation zone agitated vessel is well mixed and has a Re > 6,400, with a blend time of 0-1,200 seconds, preferably 0-120 seconds, more preferably 0-45 seconds.

The precipitation zone temperature is maintained between 30-80$^0$C, but more preferably from 45-60°C.

The pH of each precipitation zone is maintained from 7-13, but preferably from 10.5-12 when precipitating hydroxides and 8.5-10 when precipitating carbonates.

The stream ($a_i$) contains the cations for precipitation with a concentration from 0.001-6 (mol cation / L). The metal cation is selected from Mg, Ca, Ti, V, Cr, Mn, Fe, Co, Ni, Cu, Al, or any combinations thereof. The metal cation resource is selected from sulfate, carbonate, chloride, nitrate, fluoride, oxide, hydroxide, oxyhydroxide, oxalate, carboxylate or acetate, phosphate, borate or any combinations thereof.

The stream ($b_i$) contains the anions for precipitation with a concentration from 0.001-14 (mol anion / L). The stream ($b_i$) is selected from $NaOH$, $Na_2CO_3$, $NaHCO_3$, $Na_2C_2O_4$, $LiOH$, $Li_2CO_3$, $LiHCO_3$, $Li_2C_2O_4$, $KOH$, $K_2CO_3$, $KHCO_3$, $K_2C_2O_4$ or any combinations of the species listed.

The stream ($d_i$) contains the chelating agents adding to the reaction zone at a concentration from 0.001-14 (mol chelating agent / L). The stream ($d_i$) is selected from ammonia hydroxide, ammonium chloride, ammonium sulfate, ammonium dihydrogen phosphate, ethylene glycol, carboxylic acids, ammonium nitrate, glycerol, 1,3 propane-diol, urea, N,N'-dimethylurea, quaternary ammonia salts or any combinations thereof.

The stream ($e_i...z_i$) may contain additional solvents, surface acting agents, de-foaming agents, or dopants. For dopants, since they become part of the final product, the total concentration of dopant species should be less than 5% of the mol % of the final material.

The slurry outflow from the last precipitation zone N is collected in a hold up tank or directly fed to a solid-liquid filtration device. The filtration device may be a plate and frame filter, candlestick filter, centrifuge, vacuum drum filter, pressure drum filter, hydrocyclone, clarifier or some combination of devices. The filtered precipitated particles must be washed to remove byproduct salts from the precipitation reactions.

The filtered precipitated particles (i.e., filter cake) is then dried under vacuum, $N_2$, Ar or Air for 3-24 hours

between 80-200$^0$C.

Once dried, the particles are contacted with a lithium precursor and well mixed. The lithium resource is selected from LiOH*H$_2$O, Li$_2$CO$_3$, LiNO$_3$, lithium acetate, lithium metal or Li$_2$O. Lithium hydroxide and lithium carbonate are the preferred choice. The Li to metal cation ratio is between 0.5-1.5, and preferred from 0.9-1.15, and more preferably from 1.01-1.10.

The well mixed lithium source and precipitated particles are then calcined from 300-950$^0$C, and multiple hold temperatures and ramp rates are used. At least one hold temperature from 300-500$^0$C for 2-12 hours will occur before another heating from 700$^0$C to 850°C for 2-20 hours. The ramp rate during heating is from 0.5 to 10 degrees per minute, and 2-5 degrees per minute is preferred. The calcination time is from 2 hours to 48 hours. The calcination atmosphere is selected from N2, air, dried air, oxygen or some combination. The reaction temperature is a critical item for concentration gradient materials, since too high, too long, or a combo of the two may cause so much cation diffusion that a gradient is no longer present in the final cathode particle.

To characterize the precipitated and cathode active material concentration gradient powders elemental analysis, SEM, BET, tap density, circularity, residual lithium analysis and particle size distributions can be utilized. The presence of a concentration gradient can be confirmed by depth profiling a particle or via cross-sectioning a particle and using an EDS line scan or electron microprobe analyzer.

The surface area is measured using the BET nitrogen adsorption method.

The tap density is measured using a tapper instrument.

The precipitated and cathode material particles can be characterized using the particle size distribution D10, D50, D90 or the Sauter mean diameter, d$_{32}$, where:

$$d_{32} = \frac{\sum_{k=1}^{N} n_k d_k^3}{\sum_{k=1}^{N} n_k d_k^2}$$

where n$_k$ is the relative fraction and d$_k$ is the bin diameter from the particle size distribution. The particle size distribution can be collected via a light scattering instrument.

The residual Li is determined using pH measurements and acid titrations of cathode material filtrate.

Images of the particles can be collected using a scanning electron microscope. Using analysis software such as ImageJ, it is possible to determine the fraction of particles that have greater than 0.85 circularity. Circularity is defined as:

$$Circularity = 4\pi \frac{(particle\ area)}{(particle\ perimeter)^2}$$

where a circularity of 1 means a perfect circle.

The resulting material is a concentration gradient cathode active material. The active material, possibly mixed with a binder and conductive particle, is cast on a metallic foil to form a cathode electrode. Said electrode can be used in a lithium-ion battery.

To test the cathode material performance, galvanotactic charge-discharge tests can be performed. The material capacity, cycle retention, rate performance and cycle efficiency can all then be determined.

Based on the inventive method, a multilayer core-shell material with N distinct compositions is prepared. Broadly speaking, the cation composition of (a;) from one layer to the next, and the average cation composition of the final active material, has no restrictions on selection. To avoid excessive delamination between the cathode layers, however, the magnitude of composition change must be limited. To quantify the magnitude of the change, the following expression can be used:

$$M = \sum_{j=1}^{j} \left| (a_i)_j - (a_{i+1})_j \right|$$

where M is the magnitude of cation mol fraction changes, $(a_i)_j$ is the mol fraction for each cation j present in layer i and i+1.

It is preferred that M = 0.05-0.3, more preferred from 0.05-0.2, more preferred from 0.075-0.15.

As a preferred embodiment, to prepare the desired high energy material with improved interfacial safety, M is from 0.075-0.2 and the multilayer core-shell precipitated particle composition is described by the formula (Ni$_x$Mn$_y$Co$_z$Me$_{1-x-y-z}$)(CO$_3$)$_a$(OH)$_{2-2a}$. The Ni content in each layer obeys x1 ≥ x2 ≥ ... ≥ xN. And the precipitated particle has an average composition within 0 < a < 1; x+y+z > 0.95; x > 0.7; z < 0.35. The core layer, i=1, must be selected from 0.85 ≤ x1 ≤ 1;

$0 \leq z1 \leq 0.15$ to provide the high-energy density of Ni, while the surface, layer N, is selected from $0.4 \leq xN \leq 0.7$; $0.25 \leq yN \leq 0.5$ to provide improved stability. In all cases, $x + y + z \geq 0.95$.

Regarding the collected product of the invented embodiments, the advantages are most apparent when the continuous process exists in a non-transient state, which can be described as when the mass and mol balances changes with time, such as $d(\rho_{c,i}V_i)/dt$, equal zero. This condition can be determined mathematically if constant feeds are employed. Practically, this condition is attained when one skilled in the art recognizes that setting all $d(X)/dt = 0$ is an acceptable processing simplification to describe the continuous procedure, wherein $X=V_\alpha$, $F_{\alpha,i}$ or $\rho_{\alpha,i}$, such as $d(V_\alpha)/dt=0$ and $d(F_{\alpha,i})/dt=0$ and $d(\rho_{\alpha,i})/dt=0$.

Specifically, under non-transient conditions particle specs, such as the specific surface area, tap density and particle size will also effectively cease to change with time. This means the outflow particles collected should no longer significantly alter with time. In comparison to a transient process, where the collected processing values is constantly changing with time. In the special case where several batch reactions final product are compared to the continuous process described for equal time or production rate, the variance can be used to determine how precise the resulting products are for each method. The variance is defined as the square of the standard deviation for a data value collected for over a set of concentration gradient powders.

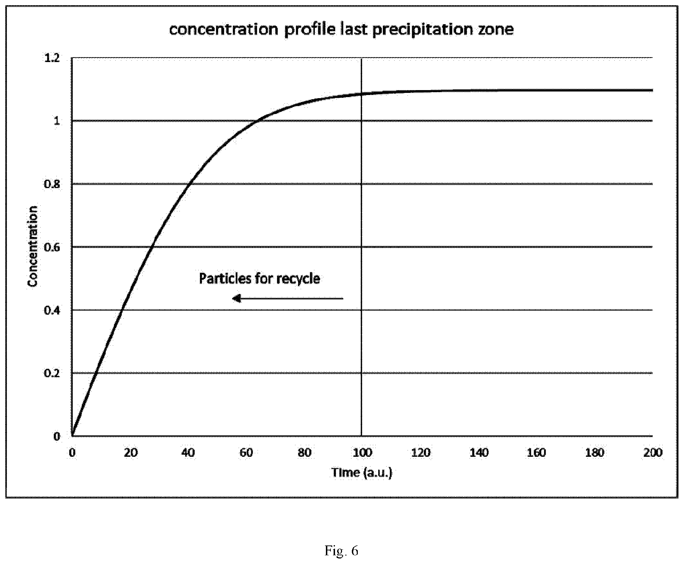

In one embodiment, the precursor particles collected from precipitation zone N that are not to be used to prepare cathode concentration gradient active material are recycled by dissolution in an appropriate acid solution. That is, the outflow of the non-steady state particles of the last precipitation zone N are collected and recycled (see Fig. 6). The collected slurry solution can be thickened, or used as collected. To the slurry solution, an acid solution (2-98wt%) is added slowly under mild agitation, resulting in dissolution of the undesired particles back to a soluble cation for use in stream $(a_i)$ of the precipitation zone. The acid is selected from sulfuric, hydrochloric, nitric, acetic, carboxylic, phosphoric, boric, carbonic or hydrofluoric acid. After the acid addition, elemental analysis can be used to determine the concentration and composition of the fluid, and the solution can be mixed back into stream (a;) solutions in an appropriate amount.

In a preferred embodiment, the process is under transient conditions, ie $d(\rho_{c,i}V_i)/dt \neq 0$, so the particle specifications, composition and concentration gradient are changing with time, as is common during process start-up.

Using the inventive process concentration gradient precipitated particles with a multilayer core-shell structure that can be collected continuously and will have a core and surface composition that does not change with time.

Compared to the single precipitation zone methods previously described to prepare concentration gradient materials, the inventive method described will result in:

increasing the tap density, lowering the gravimetric surface area, more higher Sauter mean diameter ($d_{32}$), increasing the precipitation particle slurry density (kg particles / L fluid), decreasing the fluid waste generated, more waste fluid reduction, and improvement in the fraction of particles that have circularity between 0.85-1 for the precipitated and cathode material particles.

The variance of collected particles will be from 0 < [continuous methods variance] < [batch methods variance] when the data sets are prepared from sample collections of equal time of collected product equivalent to a single batch reaction time or production amount. Descriptors that will have improved variance are the particle BET surface area, tap density, particle size $d_{32}$ & D50, circularity and residual Li content. The effect, when appropriate, will apply to both the precipitated particles and the cathode material particles.

A method to reduce concentration gradient material delamination.

An increase in capacity retention compared to a nominal material with same average composition, and a core-shell material with same core, surface and average composition.

The procedure is described to reduce solid waste and increase mass yields by recycling any precipitated particles deemed off-spec. In particular, this procedure is a way to avoid material waste that results during continuous processing start-up.

**Example 1**

**Preparing the core-multi-shell particles continuously**

Four coprecipitation reactors with listed volumes of 4L, 20L, 50L and 50L are set-up in series. Pumps to move the reactor fluid from the 4L to the 20L, the 20L to the 50L and the 50L to the 50L are set-up as well so the fluid could flow in the series order during the trials. Each reactor has a mechanical agitator, a heating jacket, pH sensor and pH controller.

Before starting the reaction, four 2mol/L transition metal solutions are prepared from salts of NiSO4, MnSO4 and CoSO4 with the composition ratios of Ni:Mn:Co 0.95:0:0.05 for the 4L system, 0.85:0.05:0.1 for the 20L reactor, 0.8:0.1:0.1 for the first 50L reactor, and 0.7:0.25:0.05 for the second 50L reactor. The transition metal solutions are made in abundance to ensure amble solution is available during the continuous processing. Identical solutions of NaOH (32wt%) and aqua ammonia (20wt%) are also prepared.

Prior to starting the co-precipitation reaction, 3.5L of 6.8g/L aqua ammonia solution is added to the 4L reactor, while 16L, 28L, and 45L of 10.2g/L aqua ammonia solutions are added to the 20L, 50L and 50L reactors, respectively. All reactors are heated to 50 degrees Celsius, and N2 is sparged into each reactor to remove soluble and headspace oxygen. Right before starting the reactions, the pH is set to 11.9, 11.9, 11.7 and 11.3 for the 4L, 20L, 50L and 50L reactors, respectively.

For the 4L reactor, 40mL/hr of aqua ammonia (20wt%) and 450mL/hr of metal sulfate solution are fed to the reactor. The appropriate amount of NaOH solution to control the pH is added via a metering controller and pump. For the 20L reactor, 140mL/hr of aqua ammonia and 1.6L/hr of metal sulfate solution, and the outflow from the 4L reactor are fed to the system. NaOH solution to control the pH is added via a metering controller and pump. For the first 50L reactor, 140mL/hr of aqua ammonia and 1.6L/hr of metal sulfate solution are added in addition to the outflow from the 20L reactor. NaOH solution to control the pH is added via a metering controller and pump. For the second 50L reactor, 220mL/hr of aqua ammonia and 2.5L/hr of metal sulfate solution are fed to the system in addition to the outflow from the first 50L reactor. NaOH solution to control the pH is added via a metering controller and pump. The fluid heights are controlled as closely as possible to not change volume from the starting volume in the reactor.

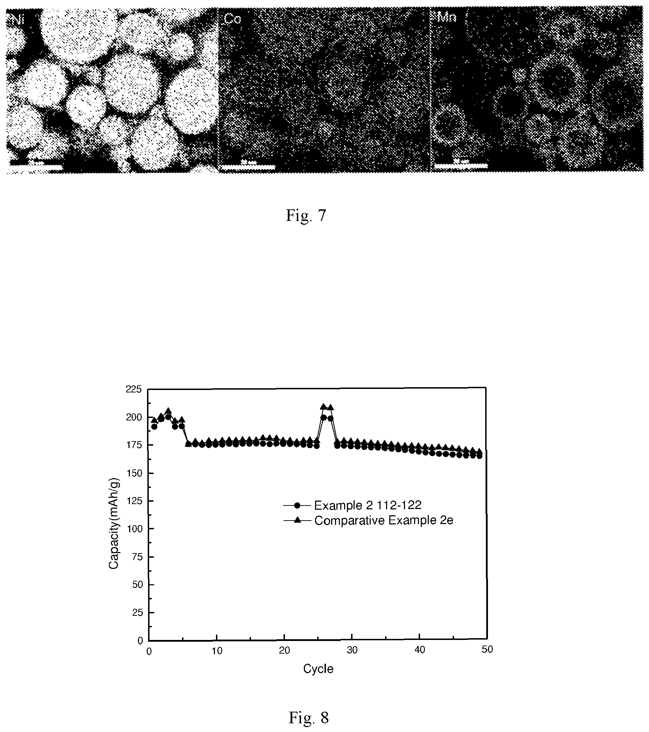

The particles leaving the fourth reactor in the series, the second 50L vessel, are binned in various time increments until 102hrs of reaction has occurred. By 102 hours, the reaction is expected to be at steady state (see Fig. 6), and then three bins are collected from 102-112hrs, 112-122hrs and 122-132hrs. The three bins after 102 hours of reaction are filtered to separate the liquid from the particles, and then washed with copious amounts of DI water to remove residual ammonia and sodium salts. The precursor powder is then dried in a 100 degrees Celsius oven under nitrogen flow overnight. In Fig. 7, the EDS of cross sectioned particles collected from 112-122 hours is shown, and the existence of clear core-shell structure can be seen in the morphology. The varied thickness of the shell signature is an indicator that the particle is multi-shelled and prepared via a continuous process.

## Physical Characterization of Particles

Tap density of the precursor and final active material is done by loading 20g of powder into a 25mL graduated cylinder and tapping for 2000 taps using a PF-300B, while the particle sizes are collected using a Malvern Mastersizer 2000 light scattering instrument. To determine the surface area WJGB Sci & Tech JW-BK400 gas adsorption instrument is used. SEM images are collected on a JEOL JSM-639OLV.

Circularity is also analyzed using the software program ImageJ. The SEM images are uploaded into the program, and then the threshold of the image adjusted to around 60 so the circularity option in the program can be performed. The output of the key information is shown in table 2.

## Example 2

### Preparation of active materials

Some of the dried precursor particles from each bin of example 1 are separately mixed with lithium hydroxide monohydrate in a 1.03:1 of Li:Ni-Mn-Co ratio, and calcined in an oxygen flowing tube furnace first at 500°C for 5hrs, followed by a second dwell of 820°C for 10hrs before cooling naturally to room temperature. The collected material is sieved using a 400-mesh sieve.

### Electrode Formation and Testing

The active material particles (90wt%) in example 2 are mixed with SuperP (5wt%) and PVDF (5wt%) in NMP to form the electrode slurry. The slurry is then cast onto an aluminum foil using a notched blade. After coating the electrode is dried to evaporate the NMP, followed by pressing the electrode in a roller press to a thickness of about 60um.

The prepared electrodes are punched into 13mm disks, and then made into coin cells with a lithium foil anode and a 1 mol/l LiPF6 EC/DEC electrolyte. The sealed cells are evaluated on a neware tester from 2.7-4.4V at 20mA/g for the first 3 cycles, 66mA/g for cycles 3-5, and 200mA/g from cycle five onward, except for check cycles done periodically at 20mAh/g. In Fig. 8, the cycle graph of the particles collected from 112-122 hours of Example 2 and Comparative Example 2e is shown. The distance normalized of the concentration gradient precipitated particles above is shown in Fig 5.

### Comparative Example 1a-e

A batch configuration is set-up using a 20L co-precipitation reactor. The reactor temperature is set to 50°C, and is loaded initially with 5L of 11.9g/L aqua ammonia solution. The reactor solution and head space are sparged with N2 gas. The pH is adjusted to 11.9 before the reaction begins. 700mL/hr of transition metal solution and 70mL/hr of 20wt% aqua ammonia are fed into the reactor for 10 hours, while at the same time the 32wt% NaOH is added to maintain the pH via a controller and pump. Every 2.5 hours the transition metal feed solution composition is changed to make a batch core-multi-shell material. The composition of Ni:Mn:Co is changed from 0.95:0:0.05 to 0.85:0.05:0.1 to 0.8:0.1:0.1 to 0.7:0.25:0.05 during the 10hr reaction time. After 10 hours, the particles inside the reactor are collected by draining the reaction tank. All further post-processing steps are identical to Example 1.

The batch trial is repeated 5 times to determine the variability of the trials.

**Comparative Example 2a-e**

The Comparative examples 1a-e are treated identical to Example 2.

**Comparative Example 3**

A batch configuration is set-up using a 20L co-precipitation reactor. The reactor temperature is set to 50°C, and is loaded initially with 5L of 11.9g/L aqua ammonia solution. The reactor solution and head space are sparged with N2 gas. The pH is adjusted to 11.9 before the reaction begins. 700mL/hr of transition metal solution and 70mL/hr of 20wt% aqua ammonia are fed into the reactor for 10 hours, while at the same time the 32wt% NaOH is added to maintain the pH via a controller and pump. The composition of Ni:Mn:Co is a constant at 0.78:0.13:0.09 during the 10hr reaction time. After 10 hours, the particles inside the reactor are collected by draining the reaction tank. All further post-processing steps are identical to Example 1.

**Comparative Example 4**

The Comparative Example 3 are treated identical to Example 2.

**Example 3**

10kg of precursor with Ni:Mn:Co ratio of 0.782:0.146:0.072 prepared before 102hrs in example 1 is mixed with 5L of 18.4mol/L H2SO4 solution. The precursor loaded is in excess. The solution is mixed for 30 hours before being separated via filtration. The filtrate is tested via ICP to determine the transition metal compositions. The remaining precursor is weighed to determine the dissolution yield of the recycle method.

Table 1 - Comparison of precursor cathode particles from different methods.

| | TD (g/cc) | D50 (um) | D32 (um) | Ni/ NMC | Co/ NMC | Mn/ NMC | Yield (kg/L) |
|---|---|---|---|---|---|---|---|
| Comparative Example 3 | 1.890 | 11.210 | 10.802 | 0.784 | 0.086 | 0.130 | -- |
| Comparative Example 1a | 1.820 | 13.410 | 7.715 | 0.783 | 0.087 | 0.130 | 0.077 |
| Comparative Example 1b | 1.900 | 11.300 | 6.147 | 0.790 | 0.088 | 0.122 | 0.078 |
| Comparative Example 1c | 1.890 | 11.590 | 10.982 | 0.792 | 0.089 | 0.120 | 0.080 |
| Comparative Example 1d | 1.830 | 10.260 | 9.750 | 0.786 | 0.088 | 0.127 | 0.070 |
| Comparative Example 1e | 1.820 | 11.380 | 10.812 | 0.786 | 0.089 | 0.125 | 0.085 |
| **AVG Comp. Example 1** | **1.858** | **11.525** | **9.08** | **0.787** | **0.088** | **0.126** | **0.078** |
| Variance Comp. Example 1 | 0.001 | 1.066 | 4.383 | 0.000 | 0.000 | 0.000 | 0.000 |
| Example 1 - 102-112 hrs | 2.130 | 17.950 | 14.941 | 0.784 | 0.075 | 0.141 | 0.110 |
| Example 1 - 112-122 hrs | 2.150 | 17.700 | 15.748 | 0.787 | 0.080 | 0.133 | 0.105 |
| Example 1 - 122-132 hrs | 2.110 | 18.630 | 16.719 | 0.793 | 0.079 | 0.128 | 0.104 |
| **AVG Example 1** | **2.130** | **18.093** | **15.803** | **0.788** | **0.078** | **0.134** | **0.106** |
| Variance Example 1 | 0.000 | 0.232 | 0.793 | 0.000 | 0.000 | 0.000 | 0.000 |

Table 2 - Comparison of circularity fraction for various precursor cathode production methods.

| | Threshold | Count | Mean Circularity | StdDev | Bin Width | % Circularity >0.85 |
|---|---|---|---|---|---|---|
| Comparative example 1a | 60 | 179 | 0.575 | 0.2 | 0.033 | 2% |
| Comparative example 1b | 60 | 80 | 0.446 | 0.169 | 0.033 | 0% |
| Comparative example 1c | 60 | 235 | 0.617 | 0.198 | 0.033 | 12% |
| Comparative example 1d | 60 | 73 | 0.422 | 0.183 | 0.033 | 0% |
| Comparative example 1e | 60 | 59 | 0.481 | 0.18 | 0.033 | 0% |
| | | | | | AVERAGE: | 3% |
| Example 1 - 102-112 hrs | 56 | 276 | 0.488 | 0.213 | 0.033 | 6% |
| Example 1 - 112-122 hrs | 40 | 170 | 0.593 | 0.211 | 0.033 | 12% |
| Example 1 - 122-132 hrs | 78 | 223 | 0.644 | 0.217 | 0.033 | 19% |
| | | | | | AVERAGE: | 12% |

Table 3 - Comparison of final cathode material characteristics from different methods.

| | TD (g/cc) | D50 (um) | D32 (um) | BET (sq. m / g) |
|---|---|---|---|---|
| Comparative Example 4 | | 10.4 | 7.429 | 0.82 |
| Comparative Example 2a | 2.41 | 11.9 | 11.272 | 0.43 |
| Comparative Example 2b | 2.36 | 10.4 | 10.755 | 0.4 |
| Comparative Example 2c | 2.34 | 11.4 | 10.815 | 0.39 |
| Comparative Example 2d | 2.44 | 9.57 | 9.124 | 0.5 |
| Comparative Example 2e | 2.35 | 11.2 | 10.545 | 0.45 |
| **Average** | **2.38** | **10.9** | 10.502 | 0.43 |
| | | | | |
| Example 2 102-112 hrs | 2.62 | 14.5 | 11.723 | - |
| Example 2 112-122 hrs | 2.4 | 21 | 17.566 | 0.31 |
| Example 2 122-132 hrs | 2.39 | 20.4 | 17.964 | 0.29 |
| **Average** | **2.47** | **18.6** | 15.75 | **0.3** |
| | | | | |

Table 4 - Outcome of precursor recycle method for non-steady state particles.

| Precursor Present (kg) | Precursor Dissolved (kg) | Theoretical Precursor Dissolved (kg) | ICP Ni/NMC ratio | ICP Mn/NMC ratio | ICP Co/NMC ratio |
|---|---|---|---|---|---|
| 10 | 7.67 | 8.52 | 0.905 | 0.017 | 0.077 |

**Claims**

1.  A method comprising:

    providing a plurality of precipitation zones from i=1 to N, wherein the precipitation zones are connected in series, each precipitation zone comprises a feed stream ($a_i$) providing the precipitation cations, a feed stream ($b_i$) providing the precipitation anions, a continuous outflow ($c_i$) of precipitation particle slurry to the next precipitation zone, and a continuous inflow ($c_{i-1}$) of precipitation particle slurry from the prior precipitation zone, and

forming, in the precipitation zones, precipitated particles, and finally to form, in the precipitation zone N, precursor particles comprised of N layers, wherein layer i of each particle is precipitated and formed in the precipitation zone i, and

wherein N is not less than 3, and when i=1, there is no inflow ($c_{i-1}$); the precursor particles are further separated and dried under vacuum, $N_2$, Ar or air for 3-24 hours between 80-200 $^0$C to get dried precursor particles; the dried precursor particles are mixed with a lithium resource and calcined in an oxygen or air to form gradient multilayer core-shell cathode materials; the mixed precursor particles and lithium resource are calcined from 300-950$^0$C, and multiple hold temperatures and ramp rates are used, at least one hold temperature from 300-500$^0$C for 2-12 hours occurs before another heating from 700-950$^0$C for 2-20 hours, the ramp rate during heating is from 0.5 to 10 degrees per minute

2. The method of claim **1,** wherein the lithium resource is selected from $LiOH^*H_2O$, $Li_2CO_3$, $LiNO_3$, lithium acetate, lithium metal or $Li_2O$, the Li to metal cations ratio is between 0.5-1.5.

3. The method of claim **1,** wherein each precipitation zone is blanketed or bubbled by He, N2 or Ar gas.

4. The method of claim **1,** wherein the precipitation cation is selected from Mg, Ca, Ti, V, Cr, Mn, Fe, Co, Ni, Cu, Al, or any combinations thereof, and cation resource is selected from sulfate, carbonate, chloride, nitrate, fluoride, oxide, hydroxide, oxyhydroxide, oxalate, carboxylate, acetate, phosphate, borate, or any combinations thereof.

5. The method of claim **1,** wherein at least one precipitation zone has a different cation composition from the adjacent precipitation zone.

6. The method of claim **1,** wherein the stream ($b_i$) is selected from NaOH, $Na_2CO_3$, $NaHCO_3$, $Na_2C_2O_4$, LiOH, $Li_2CO_3$, $LiHCO_3$, $Li_2C_2O_4$, KOH, $K_2CO_3$, $KHCO_3$, $K_2C_2O_4$ or any combinations thereof.

7. The method of claim **1,** wherein at least one precipitation zone further comprises an inlet stream ($d_i$) providing chelating agents, the chelating agent is selected from ammonia hydroxide, ammonium chloride, ammonium sulfate, ammonium dihydrogen phosphate, ethylene glycol, carboxylic acids, ammonium nitrate, glycerol, 1,3 propane-diol, urea, N,N'-dimethylurea, quaternary ammonia salts or any combinations thereof.

8. The method of claim **1,** wherein $V_i$ is the volume of the precipitation zone i, and it has the relationship of $V_1 \leq V_2 \leq ... \leq V_N$.

9. The method of claim **1,** wherein the precursor particle is described by the formula $(Ni_xMn_yCo_zMe_{1-x-y-z})(CO_3)_a(OH)_{2-2a}$, and the precursor particle has an average composition within $0 < a < 1$; $x+y+z > 0.95$; $x > 0.7$; $z < 0.35$.

10. The method of claim **1,** further comprising:

collecting the outflow ($c_i$) of non-steady state particles of the last precipitation zone N at the initial reaction stage; adding acid solution to dissolve the non-steady state particles to get a fluid; determining the concentration and composition of the fluid, and introducing the fluid into the feed stream ($a_i$).

**Patentansprüche**

1. Ein Verfahren bestehend aus:

Der Bereitstellung einer Vielzahl von Präzipationszonen von i=1 bis N, wobei die Präzipationszonen in Reihe verbunden sind; jede Präzipationszone aus einem Zustrom ($a_i$) besteht, der die Ausfall-Kationen liefert, einen Zustrom ($b_i$), der die Ausfall-Anionen liefert, einen kontinuierlichen Auslauf ($C_i$) des Ausfallpartikelschlamms in die nächste Präzipationszone und einen kontinuierlichen Einlauf ($C_{i-1}$) des Ausfallpartikelschlamms aus der vorherigen Präzipationszone, und
Der Bildung von angereicherten Teilchen in den Präzipationszonen, um in der Präzipationszone N Vorläufer-Partikel mit N Schichten zu enthalten, wobei die Schicht jedes einzelnen Teilchens in der Ausfallzone i gebildet und perzipiert wird, sowie dass

N nicht weniger als 3 beträgt, sowie es keinen Einfluss (Ci-i) gibt sollte i=1 betragen; die Vorläufer-Teilchen werden darüber hinaus getrennt und im Vakuum, mit $N_2$, Ar oder Luft für 3-24 Stunden zwischen 80-200 $^0$C getrocknet um trockene Vorläufer-Teilchen zu erhalten; die getrockneten Vorläufer-Teilchen werden mit einer Lithiumquelle gemischt und in Sauerstoff oder Luft kalziniert um abgestuftes inneres Kathodenmaterial zu erhalten; die gemischten Vorläufer-Teilchen und die Lithiumquelle werden ab 300-950$^0$C kalziniert und man kann verschiedene Temperaturen und Rampengrade nutzen,

eine Mindesttemperatur von 300-500$^0$C kann für 2-12 Stunden vor der weiteren Aufheizung auf 700-950°C für 2-20 Stunden bestehen, der Rampengrad beträgt während der Aufheizung von 0.5 bis 10 Grad pro Minute.

2. Das Verfahren nach Anspruch 1, wobei die Lithiumquelle aus LiOH*$H_2$O, $Li_3CO_3$, $LiNO_3$, Lithiumacetat, Lithiummetall oder $Li_2$O gewählt werden kann, und das Verhältnis von Li zu Metallkationen-Ratio zwischen 0.5 und 1.5 betragen kann.

3. Das Verfahren nach Anspruch 1, wobei die Präzipationszone von He, N2 oder Ar Gas bedeckt oder beschäumt wird.

4. Ein Verfahren nach Anspruch 1 , wobei die Präzipationskationen zwischen Mg, Ca, Ti, V, Cr, Mn, Fe, Co, Ni, Cu, Al oder jedweder Kombination ihrer gewählt werden können, die Kationenquelle kann zwischen Sulfat, Karbonat, Chlorid, Nitrat, Fluoride, Oxid, Hydroxid, Oxyhydroxid, Oxalat, Karboxylat, Acetat, Phosphat, Borate, oder jeder Kombination ihrer gewählt werden,

5. Das Verfahren noch Anspruch 1, wobei zumindest eine Präzipationszone eine unterschiedliche Kationenzusammensetzung als die benachbarte Präzipationszone aufweist.

6. Das Verfahren nach Anspruch 1, wobei der Dampf ($b_i$) aus NaOH, $Na_2CO_3$, $NaHCO_3$, $Na_2C_2O_4$, LiOH, $Li_2CO_3$, $LiHCO_3$, $Li_2C_2O_4$, KOH, $K_2CO_3$, $KHCO_3$, $K_2C_2O_4$ oder jedweder Kombination ihrer gewählt werden kann,

7. Das Verfahren nach Anspruch 1, wobei zumindest eine Präzipationszone desweitern einen inneren Gasfluss beinhaltet, der Chelatbildner bereitstellt. Die Chelatbildner können aus Ammoniumhydroxid, Ammoniumchlorid, Ammoniumsulfat, Ammoniumdihydrogenphosphat, Ethylenglykol, Karboxylicsäuren, Ammoniumnitrate, Glycerol, 1,3 Propan-Diol, Urea, N,N'-Dimethylurea, Quaternaryammonium-Salzen oder jedweder Kombination ihrer gewählt werden,

8. Das Verfahren nach Anspruch 1, wobei Vi das Volumen der Präzipationszone i ist, und es der Beziehung von Vi zu V2 ... VN entspricht.

9. Das Verfahren nach Anspruch 1, wobei das Vorläufer-Teilchen in der Formel $(Ni_x Mn_y CO_z Me_{1-x-y, z})(CO_3)_a(OH)_{2-2a}$ beschrieben wird und es über eine durchschnittliche Komposition innerhalb der Parameter <a<1; x+y+z>0.95; x>0.7; z< 0.35 verfügt.

10. Das Verfahren nach Anspruch 1, welches weiterhin enthält:

Die Sammlung des Ausflusses ($C_i$) bestehend aus unsteten Teilchen aus der letzten Präzipationszone N bei der eingehenden Reaktionsstufe;
Den Zusatz von Säurelösung um die unsteten Teilchen in flüssiger Form aufzufangen;
Die Bestimmung der Konzentration und Komposition der Flüssigkeit, sowie Einleitung der Flüssigkeit in den Gasstromzufluss (a;).

**Revendications**

1. Un procédé comprenant :

l'approvisionnement d'une pluralité de zones de précipitation de i=1 à N, les zones de précipitation étant connectées en série, chaque zone de précipitation comprend un courant d'alimentation ($a_i$) fournissant les cations de précipitation, un écoulement continu ($C_i$) de suspension de particules de précipitation vers la zone de précipitation suivante, et un afflux continu ($C_{i-1}$) de suspension de particules de précipitation depuis la zone de précipitation précédente, et
la formation, dans les zones de précipitation, de particules précipitées, et enfin la formation, dans la zone de précipitation N, de particules précurseurs constituées de N couches, la couche i de chaque particule étant précipitée et formée dans la zone de précipitation i, et

dans laquelle N n'est pas inférieur à 3, et lorsque i=1, il n'y a pas d'afflux ($C_{i-1}$) ; les particules précurseurs sont encore séparées et séchées sous vide, $N_2$, Ar ou air pendant 3-24 heures entre 80-200 °C pour obtenir des particules de précurseur séchées ; les particules de précurseur séchées sont mélangées à une ressource en lithium et calcinées dans un milieu oxygéné ou dans l'air pour former des matériaux cathodiques coeur-coquille multicouches à gradient ; les particules de précurseur et la ressource en lithium mélangées sont calcinées de 300 à 950°C, et plusieurs températures de maintien et taux de rampe sont utilisés, au moins une température de maintien de 300-500°C pendant 2-12 heures se produit avant un autre chauffage de 700-950°C pendant 2-20 heures, le taux de rampe pendant le chauffage est de 0,5 à 10 degrés par minute

2. Le procédé de la revendication 1, dans laquelle la ressource en lithium est choisie parmi LiOH\*$H_2O$, $Li_2CO_3$, $LiNO_3$, acétate de lithium, lithium métallique ou $Li_2O$, le rapport entre le Li et les cations métalliques est compris entre 0,5 et 1,5.

3. Le procédé de la revendication 1, dans laquelle chaque zone de précipitation est couverte ou mise en bulle par du gaz He, $N_2$ ou Ar.

4. Le procédé selon la revendication 1, dans laquelle le cation de précipitation est choisi parmi Mg, Ca, Ti, V, Cr, Mn, Fe, Co, Ni, Cu, Al, ou toute combinaison entre eux, et la ressource cationique est choisie parmi les sulfate, carbonate, chlorure, nitrate, fluorure, oxyde, hydroxyde, oxyhydroxyde, oxalate, carboxylate, acétate, phosphate, borate, ou toute combinaison entre eux.

5. Le procédé de la revendication 1, dans laquelle au moins une zone de précipitation a une composition cationique différente de la zone de précipitation adjacente.

6. Le procédé selon la revendication 1, dans laquelle le courant ($b_i$) est choisi parmi NaOH, $Na_2CO_3$, $NaHCO_3$, $Na_2C_2O_4$, LiOH, $Li_2CO_3$, $LiHCO_3$, $Li_2C_2O_4$, KOH, $K_2CO_3$, $KHCO_3$, $K_2C_2O_4$ ou toute combinaison entre eux.

7. Le procédé de la revendication 1, dans laquelle au moins une zone de précipitation comprend en outre un flux d'entrée ($d_i$) fournissant des agents chélateurs, l'agent chélateur est choisi parmi l'hydroxyde d'ammonium, le chlorure d'ammonium, le sulfate d'ammonium, le dihydrogénophosphate d'ammonium, l'éthylèneglycol, les acides carboxyliques, le nitrate d'ammonium, le glycérol, 1,3 propanediol, l'urée, la N,N'-diméthylurée, les sels d'ammoniac quaternaire ou toute combinaison entre eux.

8. Le procédé selon la revendication 1, dans laquelle Vi est le volume de la zone de précipitation i, et il a la relation Vi V2... VN.

9. Le procédé selon la revendication 1, dans laquelle la particule précurseur est décrite par la formule ($Ni_x$ $Mn_y CO_z Me_{1-x-y-z}$) $(CO_3)_a (OH)_{2-2a}$, et la particule précurseur a une composition moyenne comprise entre 0<a<1 ; x+y+z>0,95 ; x>0,7 ; z<0,35.

10. Procédé selon la revendication 1, comprenant en outre :

la collecte du flux sortant (Ci) de particules non stationnaires de la dernière zone N de précipitation à l'étape de réaction initiale ;
l'ajout d'une solution acide pour dissoudre les particules à l'état instable afin d'obtenir un fluide ;
la détermination de la concentration et de la composition du fluide, et l'introduction du fluide dans le courant d'alimentation ($a_i$).

Zone i → Zone i+1 → Zone i+2

Fig.1

$a_i$ $b_i$

$c_{i-1}$ → Zone i → $c_i$

$d_i$

Fig.2

Zone1 → Zone 2A → Zone 3A → Zone 4 → Zone 5

Zone 2B

Zone 3B

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62532996
- US 7695649 B
- CN 100593253
- CN 103326016
- US 8591774 B

**Non-patent literature cited in the description**

- **AMIRUDDIN et al.** *ECS Trans.,* 2008, vol. 6, 3-9